## Europäisches Patentamt
## European Patent Office
## Office européen des brevets

(19)

(11) Numéro de publication: **0 057 127**
**B1**

(12) # FASCICULE DE BREVET EUROPEEN

(45) Date de publication du fascicule du brevet:
**21.11.84**

(51) Int. Cl.³: **F 16 D 65/09**, F 16 D 65/54

(21) Numéro de dépôt: **82400087.1**

(22) Date de dépôt: **18.01.82**

(54) **Frein à tambour à recentrage automatique des segments.**

(30) Priorité: **23.01.81 FR 8101258**

(43) Date de publication de la demande:
**04.08.82 Bulletin 82/31**

(45) Mention de la délivrance du brevet:
**21.11.84 Bulletin 84/47**

(84) Etats contractants désignés:
**DE FR GB IT NL SE**

(56) Documents cités:
**FR - A - 1 333 050**
**FR - A - 1 537 112**
**FR - A - 2 291 411**
**FR - A - 2 334 014**
**US - A - 2 102 851**
**US - A - 2 241 479**
**US - A - 2 596 380**

(73) Titulaire: **SOCIETE ANONYME D.B.A., Centre Paris Pleyel, F-93521 St-Denis Cédex 01 (FR)**

(72) Inventeur: **Muscat, Gérard, 66 Avenue de Suffren, F-93150 Blancmesnil (FR)**

(74) Mandataire: **Poidatz, Emmanuel et ai, Service Brevets Bendix 44 rue François 1er, F-75008 Paris (FR)**

BUNDESDRUCKEREI BERLIN

## Description

L'invention se rapporte à un frein à tambour à recentrage automatique des segments selon le préambule de la revendication 1.

Un tel frein est connu du document FR-A-1 537 112.

Dans un type de frein à tambour semblable, le segment sollicité directement par le moteur de frein, appelé segment primaire, se déplace circonférentiellement le long du tambour pour trouver une réaction sur l'entretoise et au travers de cette réaction solliciter en l'engagement de friction le deuxième segment, qui trouve un point d'appui fixe sur le moteur de frein. La longueur de l'entretoise étant définie, le ressort de rappel, placé sur les extrémités des segments et maintenant en position de repos ceux-ci en appui sur l'entretoise, n'a aucune influence sur la position des segments par rapport au tambour lorsque le freinage est relâché. En particulier le segment secondaire, celui qui est sollicité par l'entretoise, est susceptible de rester en contact avec le tambour, le jeu disponible entre les segments et le tambour pouvant être entièrement utilisé par le segment primaire pour s'écarter du tambour. Le frein risque donc de rester en contact avec le tambour et de continuer d'engendrer un couple d'une manière incontrôlée par le conducteur, de même une usure prématurée des garnitures peut apparaître.

Le brevet français FR-A-1 537 112 mentionné ci-dessus enseigne de mettre un dispositif de recentrage agissant sur une entretoise placée entre deux extrémités de segments, les deux autres extrémités étant susceptibles d'être actionnées par un moteur de frein. Cette solution a l'avantage d'écarter effectivement les segments du tambour mais comporte l'inconvénient majeur de recentrer ceux-ci par rapport à une position initiale quelle que soit l'état d'usure des éléments de friction et donc d'engendrer des courses importantes au moteur de frein. Ce même document suggère un réglage manuel ou automatique au niveau de l'entretoise pour pallier à ce défaut. Néanmoins cette correction ne peut qu'être partielle. En effet, d'une part pour une position de repos donnée, l'allongement de l'entretoise s'effectuant symétriquement, chaque côté ne peut être allongé que dela valeur de l'usure du segment primaire qui s'use le moins et donc les déplacements de l'entretoise augmenteront au fur et à mesure de l'usure du segment secondaire; d'autre part pour un réglage automatique, l'information disponible est le déplacement axial de la bobine; or celui-ci correspond à l'usure du segment secondaire seul et donc le réglage risque d'être surabondant pour le segment primaire et de provoquer un léchage avec le tambour à l'encontre du ressort de recentrage.

L'invention propose un frein du type défini ci-dessus dans lequel de tels inconvénients sont évités car le réglage automatique ne dépend pas du mouvement de l'entretoise, la mise en œuvre du réglage automatique n'intervenant que lorsqu'un deuxième moteur de frein est mis en jeu, l'entretoise coopérant alors avec chacun des segments en fonction de l'usure réelle de chacun d'eux, l'entretoise peut donc conserver une position de repos fixée une fois pour toute par le dispositif de recentrage qui maintient chacun des segments à une distance correcte par rapport au tambour.

Dans ce but, l'invention propose un frein à tambour comportant une plaque support sur laquelle sont montés coulissant deux segments susceptibles d'être amenés en engagement de friction contre un tambour tournant par un premier moteur de frein, interposé entre deux premières extrémités adjacentes des segments sollicitées l'une vers l'autre par un premier ressort de rappel, les deux autres extrémités des segments étant sollicitées à l'aide d'un second ressort de rappel en apui sur une entretoise coopérant avec chacun des segments et comportant un dispositif de rattrapage automatique d'usure, ladite entretoise comportant en outre un dispositif de recentrage sollicitant celle-ci vers une position centrale de repos l'aide de moyens élastiques prenant appui d'une part sur un élément d'appui fixe et sur une portion d'appui portée par ladite entretoise et d'autre par sur un autre élément d'appui fixe et sur une autre portion d'appui également portée par l'entretoise, caractérisé en ce que ledit frein comporte un second moteur de frein interposé entre lesdites autres extrémités susceptible de provoquer l'engagement de friction des deux segments, ledit premier moteur de frein assurant alors l'ancrage des segments, en ce que ledit second moteur de frein est susceptible de mettre en œuvre les dispositifs de rattrapage automatique d'usure au moyen de ladite entretoise coopérant avec des éléments mobiles dudit dispositif de réglage automatique placés sur chacun desdits segments et en ce que que ladite entretoise comporte une découpe présentant des épaulements formant lesdites portions d'appui et dans laquelle pénètrent les éléments d'appui fixes.

Des modes de réalisation additionnels font l'objet des sous-revendications.

On décrira maintenant, à titre d'exemple non limitatif, un mode de réalisation préféré de l'invention en se référant aux dessins annexés dans lesquels:

—  la figure 1 représente une vue en plan d'un frein à tambour selon l'invention;
—  la figure 2 représente une vue en coupe du frein de la figure 1 selon la ligne I-I de la même figure;
—  la figure 3 représente une vue en perspective schématique du moteur de frein utilisé dans le frein de la figure 1.

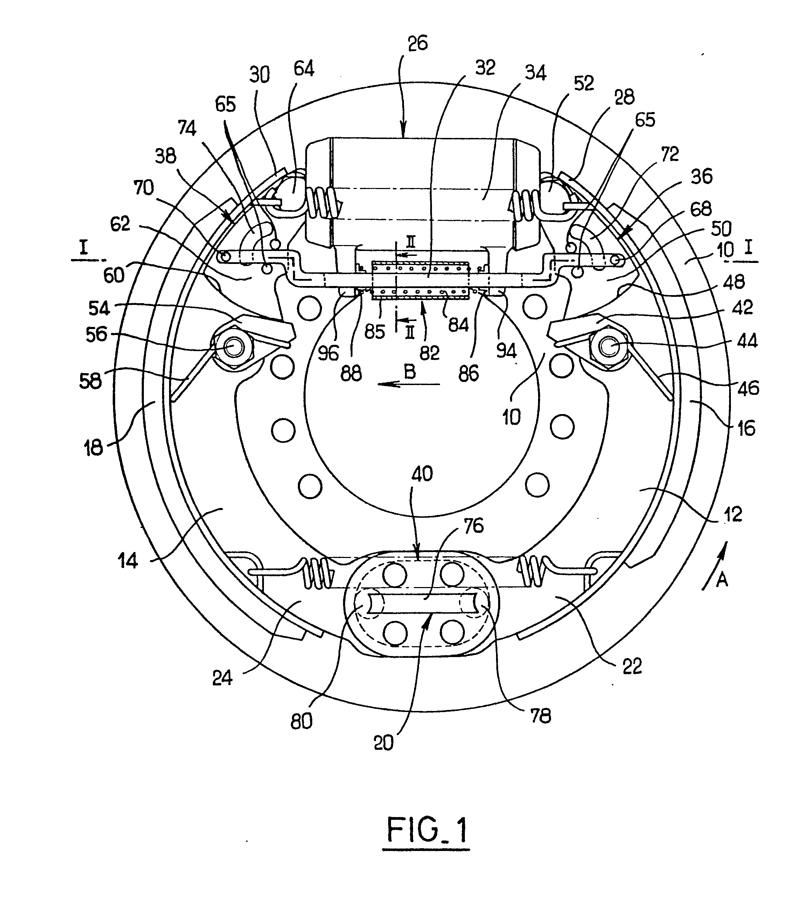

Le frein à tambour représenté sur la figure 1 comporte une plaque support 10 normalement associée à une partie fixe du véhicule (non représentée) sur laquelle sont montés coulissant deux segments de frein 12 et 14 portant des éléments de friction 16 et 18 respectivement. Un premier moteur de frein à actionnement mécanique désigné dans son ensemble par la référence 20 est interposé entre les premières extrémités 22 et 24 des segments 12 et 14 respectivement. De la même manière, un second moteur de frein à actionnement hydraulique 26 est interposé entre les deux autres extrémités 28 et 30 respectivement des segments 12 et 14. Une entretoise 32 est placée au voisinage du second moteur de frein hydraulique 26 et assure la liaison des segments 12 et 14 lors de la mise en œuvre du premier moteur de frein à actionnement mécanique 20. Un second ressort de rappel 34 sollicite normalement le segment 12 en butée contre l'entretoise 32 par l'intermédiaire d'un dispositif de rattrapage d'usure 36. De même le ressort 34 sollicite le segment 14 en butée contre l'entretoise 32 par l'intermédiaire d'un second dispositif de rattrapage d'usure 38. Un bloc d'ancrage 40 est disposé entre les extrémités 22 et 24 des segments 12 et 14 pour assurer l'ancrage de ces derniers lors de la mise en œuvre du deuxième moteur de frein hydraulique 26.

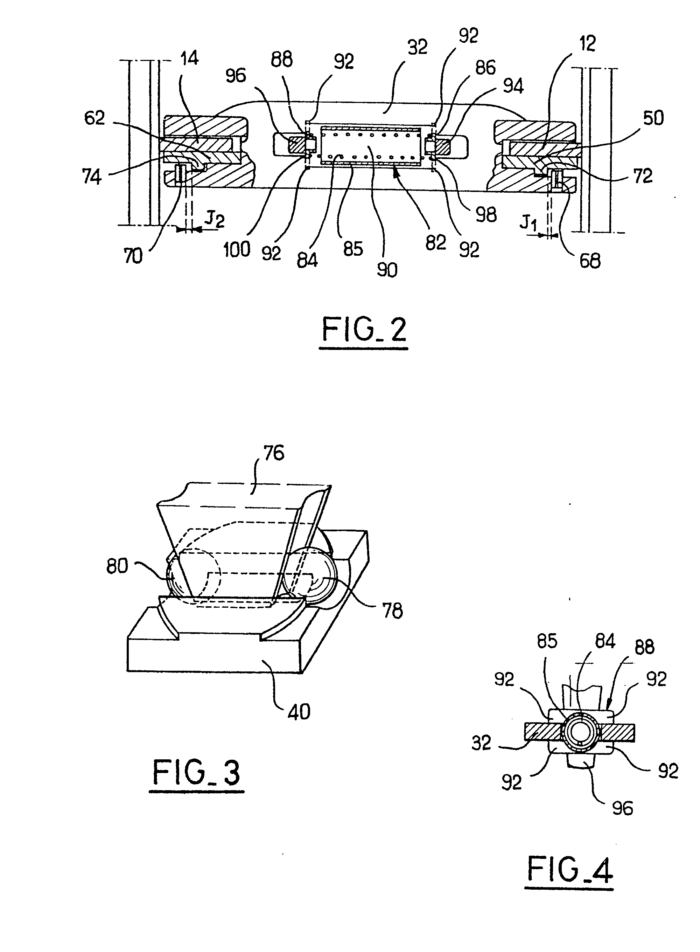

Le dispositif de rattrapage d'usure 36 comporte un cliquet 42 monté pivotant, par l'intermédiaire d'un rivet ou équivalent formant pivot 44, sur l'âme du segment 12. L'extrémité du cliquet 42 est maintenue en contact sous l'action d'un ressort de torsion 46 avec un secteur denté 48 formé sur l'extrémité d'un levier 50 monté pivotant par l'intermédiaire d'un rivet ou équivalent formant pivot 52 sur l'âme du segment 12. De même le dispositif de rattrapage d'usure 38 comporte un cliquet 54 monté pivotant par l'intermédiaire d'un rivet ou équivalent formant pivot 56 sur l'âme du segment 14. L'extrémité du cliquet 54 est maintenue en contact sous l'action d'un ressort de torsion 58 avec un secteur denté 60 formé sur l'extrémité d'un levier 62 monté pivotant, par l'intermédiaire d'un rivet ou équivalent formant pivot 64, sur l'âme du segment 14. Les leviers de réglage 50 et 62 portent des saillies 65 qui assurent le positionnement de l'entretoise 32 par rapport à ces leviers. Les dispositifs de rattrapage d'usure 36 et 38 sont mis en œuvre par des goupilles cylindriques fendues, respectivement 68 et 70, montées sur l'entretoise 32 et susceptibles de coopérer avec des saillies 72 et 74 portées par les leviers 50 et 62 respectivement, après une course d'approche respectivement J1 et J2 comme représenté sur la figure 2.

Le premier moteur de frein à actionnement mécanique 20 peut être du type de celui décrit dans FR-A-2 291 411 et représenté schématiquement sur la figure 3. Ce moteur comporte un coin 76 susceptible de solliciter en écartement deux éléments sphériques 78 et 80 qui eux mêmes sollicitent en écartement les extrémités 22 et 24 des segments 12 et 14 respectivement.

L'entretoise 32 porte un dispositif de recentrage désigné dans son ensemble par la référence 82. Ce dispositif comporte comune de moyens élastiques un ressort 84 monté entre deux coupelles 86 et 88 placées dans une ouverture 90 formée dans l'entretoise 32. Les coupelles 86 et 88 comportent des saillies 92, voir en particulier la figure 4, permettant à celles-ci de coulisser dans l'ouverture 90 formée dans l'entretoise 32. Les coupelles 86 et 88 sont en appui d'une part sur des éléments d'appui fixes 94 et 96 portés par le moteur de frein 26 et d'autre part en appui sur des portions d'appui 98 et 100 formées par des épaulements réalisés dans l'ouverture 90 de l'entretoise 32. Un tube 85 est monté autour du ressort 84 pour éviter à celui-ci de flamber.

Le frein qui vient d'être décrit fonctionne de la façon suivante:

Au repos, les différents éléments du frein occupent les positions représentées sur la figure 1. Lors d'une mise en œuvre hydraulique du frein, la mise sous pression du second moteur de frein 26 sollicite les segments 12 et 14 en ancrage contre les surfaces d'appui formées sur le bloc d'ancrage 40, amenant ainsi les éléments de friction 16 et 18 en contact de friction avec le tambour (non représenté). Si un rattrapage de l'usure des garnitures est nécessaire, les leviers 50 et 62 sont sollicités par les goupilles cylindriques fendues 68 et 70 au travers des saillies 72 et 74 de manière à ce que les cliquets 42 et 54 sautent une ou plusieurs dents sur les secteurs dentés 48 et 60 respectivement, de telle sorte que l'écartement des extrémités 28 et 30 des segments, devient plus important qu'avant la mise en œuvre du second moteur de frein 26. Le ressort 84 du dispositif de recentrage 82 ayant une précontrainte telle que l'entretoise 32 reste immobile lors du mouvement des segments 12 et 14 et donc lors de la mise en œuvre des dispositifs de rattrapage d'usure 36 et 38.

Lors d'une mise en œuvre du frein au moyen du premier moteur de frein 20, le coin 76 est sollicité vers le bas en considérant la figure 3, de telle sorte qu'il tend à écarter les billes 78 et 80 qui sollicitent les extrémités 22 et 24 des segments en éloignement l'une de l'autre. En désignalt par la flèche A le sens de rotation du tambour (non représenté) en marche avant, on définit le segment 12 comme étant le segment primaire et le segment 14 comme étant le segment secondaire. Lorsque l'écartement des extrémités 22 et 24 des segments est tel que les éléments de friction 16 et 18 entrent en contact avec le tambour tournant (non représenté) l'engagement en friction de l'élément de friction 16 entraîne le segment 12 dans le sens de la flèche A. Le segment 12 trouve une réaction d'appui sur l'entretoise 32 qui se déplace dans le sens de la flèche B sollicitant ainsi le segment 14 en engagement de friction contre le tambour tournant. Le segment 14 trouve une réaction d'appui sur le bloc d'ancrage 40 en repoussant la bille 80. Lors du mouvement de l'entretoise 32, la coupelle 86 est entraînée par l'épaulement 98 de l'ouverture 90 en éloignement de l'élément d'appui fixe 94, et ceci en comprimant le ressort 84. La coupelle 88 étant en appui sur l'élément d'appui fixe 96, ne se déplace pas. Au relâchement du freinage le ressort 84 repousse l'entretoise 32 par l'intermédiaire de la coupelle 86 en appui sur l'épaulement 98 jusqu'à ce que ladite coupelle 86 vienne en appui sur l'élément d'appui fixe 94, l'entretoise 32 retrouvant ainsi sa position recentrée par rapport au frein. Comme le ressort 34 maintient les segments 12 et 14 sur l'entretoise 32, les segments 12 et 14 sont éloignés du tambour tournant (non représenté) de manière à ce que tout frottement parasite soit éliminé. La distance entre le tambour et chacun des segments après relâchement du frein dépend évidemment de chacun des dispositifs de rattrapage d'usure 36 et 38 et en particulier des jeux J1 et J2 existant entre les goupilles cylindriques fendues 68 et 70 et les saillies 72 et 74 respectivement.

Lors du fonctionnement en marche arrière, le tambour tournant dans le sens inverse de la flèche A, de la même manière que précédemment on peut définir un segment primaire qui est le segment 14 et un segment secondaire qui est le segment 12, l'entretoise 32 se déplace alors dans le sens contraire de la flèche B, et la coupelle 88 se déplace dans le sens inverse de la flèche B de manière à comprimer le ressort 84 et à s'éloigner de l'élément d'appui fixe 96. Au relâchement la coupelle 88 repousse l'entretoise 32 jusqu'à ce que la coupelle 88 vienne en contact avec l'élément d'appui fixe 96. On voit ainsi que l'entretoise 32, quelque soit le sens de rotation du tambour, reprend une position centrale après relâchement du freinage de manière à ce que les épaulements 98 et 100 se trouvent en alignement avec les éléments d'appui fixe 94 et 96. Les segments venant en appui sur l'entretoise 32 au moyen du ressort 34 se trouvent donc après chaque relâchement du freinage en appui sur une butée mécanique de manière à ce que chacun des segments se trouve en éloignement du tambour tournant.

Il est bien entendu que les dispositifs de rattrapage d'usure pourraient être remplacés par des dispositifs analogues sans sortir du cadre de la présente invention. De même le premier moteur de frein à actionnement mécanique pourrait être remplacé par un moteur de frein hydraulique.

**Revendications**

1. Frein à tambour comportant une plaque support (10) sur laquelle sont montés coulissant deux segments (12, 14) susceptibles d'être amenés en engagement de friction contre un tambour tournant par un premier moteur de frein (20) interposé entre deux premières extrémités (22, 24) adjacentes des segments (12, 14) sollicitées l'une vers l'autre par un premier ressort de rappel, les deux autres extrémités (28, 30) des segments (12, 14) étant sollicitées à l'aide d'un second ressort de rappel (34) en appui sur une entretoise (32) coopérant avec chacun des segments (12, 14) et comportant un dispositif de rattrapage automatique d'usure (36, 38), ladite entretoise comportant en outre un dispositif de recentrage (82) sollicitant celle-ci vers une position centrale de repos à l'aide de moyens élastiques (84) prenant appui d'une part sur un élément d'appui fixe (94) et sur une portion d'appui (98) portée par ladite entretoise et d'autre part sur un autre élément d'appui fixe (96) et sur une autre portion d'appui (100) également portée par l'entretoise, caractérisé en ce que ledit frein comporte un second moteur de frein (26) interposé entre lesdites autres extrémités (28, 30) susceptible de provoquer l'engagement de friction des deux segments (12, 14), ledit premier moteur de frein (20) assurant alors l'ancrage des segments (12, 14), en ce que ledit second moteur de frein (26) est susceptible de mettre en œuvre les dispositifs de rattrapage automatique d'usure (36, 38) au moyen de ladite entretoise (32) coopérant avec des éléments mobiles (50, 62) desdits dispositifs de rattrapage automatique (36, 38) placés sur chacun desdits segments (12, 14) et en ce que ladite entretoise (32) comporte une découpe (90) présentant des épaulements (98, 100) formant lesdites portions d'appui (98, 100) et dans laquelle pénètrent les éléments d'appui fixes (94, 96).

2. Frein à tambour selon la revendication 1, caractérisé en ce que deux pièces d'appui (86, 88) montées dans ladite découpe (90) sont susceptibles de coulisser par rapport à celle-ci et entre lesquelles est monté un ressort (84) formant lesdits moyens élastiques (84).

3. Frein à tambour selon la revendication 2, caractérisé en ce que lesdites pièces d'appui (86, 88) sont susceptibles de coopérer avec lesdits épaulements (98, 100) sous l'action dudit ressort (84).

4. Frein à tambour selon la revendication 3, caractérisé en ce que lesdits éléments d'appui fixes (94, 96) sont espacés circonférentiellement d'une distance sensiblement égale à la distance circonférentielle desdits épaulements (98, 100) de ladite découpe (90).

5. Frein à tambour selon l'une des revendications 1 à 4, caractérisé en ce que chacun des deux dispositifs de rattrapage d'usure (36,38) assure le rattrapage de 'usure du segment correspondant (12,14) au moyen de saillies (68,70) portées par ladite entretoise (32).

6. Frein à tambour selon la revendication 5, caractérise en ce que ledit ressort (84) présente en position de repos une précontrainte supérieure à l'effort nécessaire pour mettre en oeuvre l'un quelconque des deux dispositifs de rattrapage d'usure (36,38).

7. Frein à tambour selon les revendications 5 ou 6, caractérise en ce que lesdites saillies (68, 70) sont réalisées au moyen de goupilles cylindriques fendues montées dans des alésages correspondants formés dans ladite entretoise (32) et susceptibles de coopérer avec des saillies (72, 74) portées par des éléments mobiles (50, 62) des dispositifs de rattrapage d'usure (36, 38).

8. Frein à tambour selon la revendication 2, caractérise en ce que ledit ressort (84) comporte un guide (85), pour éviter le flambage réalisé au moyen d'un tube de longueur inférieure à celle dudit ressort (84).

## Patentansprüche

1. Trommelbremse mit einem Bremsträger (10), an dem zwei Bremsbacken (12, 14) gleitend angebracht sind, die mit einer umlaufenden Bremstrommel in Reibanlage bewegbar sind, und zwar durch einen ersten Bremsmotor (20), der zwischen zwei benachbarten ersten Enden (22, 24) der Bremsbacken (12, 14) eingesetzt ist, die durch eine erste Rückholfeder aufeinander zu vorgespannt sind, wobei die beiden anderen Enden (28, 30) der Reibbacken (12, 14) mit Hilfe einer zweiten Rückholfeder (34) in Anlage mit einer Druckstrebe (32) vorgespannt sind, die mit jeder der Bremsbacken (12, 14) zusammenwirkt und eine selbsttätige Nachstellvorrichtung (36, 38) aufweist, wobei die Druckstrebe außerdem eine Zentriervorrichtung (82) aufweist, die diese in eine zentrale Ruhestellung vorspannt, und zwar mit Hilfe von elastischen Mitteln (84), die einerseits an einem ortsfesten Anschlagkörper (94) und einem von der Druckstrebe getragenen Anschlagteil (98) und andererseits an einem anderen ortsfesten Anschlagkörper (96) und einem ebenfalls von der Druckstrebe getragenen anderen Anschlagteil (100) abgestützt sind, dadurch gekennzeichnet, daß die Bremse einen zweiten Bremsmotor (26) aufweist, der zwischen den besagten anderen Enden (28, 30) eingesetzt ist, um die Reibanlage der beiden Bremsbacken (12, 14) herbeiführen zu können, wobei der erste Bremsmotor (20) somit die Verankerung der Bremsbacken (12,14) sicherstellt, daß der zweite Bremsmotor (26) in der Lage ist, die selbsttätige Nachstellvorrichtungen (36, 38) mit Hilfe der Druckstrebe (32) in Betrieb zu setzen, die mit den an jedem der Bremsbacken (12, 14) angeordneten beweglichen Teile (50, 62) der selbsttätigen Nachstellvorrichtungen (36, 38) zusammenwirkt, und daß die Druckstrebe (32) eine Ausnehmung (90) mit Schultern (98, 100) aufweist, die die besagten Anschlagteile (98, 100) bilden und in die die ortsfesten Anschlagkörper (94, 96) eindringen.

2. Trommelbremse nach Anspruch 1, dadurch gekennzeichnet, daß zwei Anschlagglieder (86, 88), die in der Ausnehmung (90) angebracht sind, bezüglich dieser gleitbar sind, und daß zwischen ihnen eine Feder (84) eingesetzt ist, die die besagten elastischen Mittel (84) bildet.

3. Trommelbremse nach Anspruch 2, dadurch gekennzeichnet, daß die Anschlagglieder (86, 88) unter der Wirkung der Feder (84) mit den Schultern (98, 100) zusammenzuwirken geeignet sind.

4. Trommelbremse nach Anspruch 3, dadurch gekennzeichnet, daß die ortsfesten Anschlagkörper (94, 96) in Umfangsrichtung einen Abstand voneinander haben, der im wesentlichen gleich dem Abstand der Schultern (98, 100) der Ausnehmung (90) in Umfangsrichtung ist.

5. Trommelbremse nach einem der Ansprüche 1—4, dadurch gekennzeichnet, daß jede der Nachstellvorrichtungen (36, 38) die Nachstellung des entsprechenden abgenutzten Bremsbacken (12, 14) mit Hilfe von Vorsprüngen (98, 70) sicherstellt, die von der Druckstrebe (32) getragen werden.

6. Trommelbremse nach Anspruch 5, dadurch gekennzeichnet, daß die Feder (84) in der Ruhestellung eine Vorspannung aufweist, die größer ist als die Kraft, die erforderlich ist um irgendeine der beiden Nachstellvorrichtungen (36, 38) zu betätigen.

7. Trommelbremse nach Anspruch 5 oder 6, dadurch gekennzeichnet, daß die Vorsprünge (68, 70) von geschlitzten zylindrischen Stiften gebildet werden, die in entsprechenden Bohrungen der Druckstrebe (32) angeordnet sind und mit Vorsprüngen (72, 74) zusammenwirken, die von beweglichen Teilen (50, 62) der Nachstellvorrichtungen (36, 38) getragen werden.

8. Trommelbremse nach Anspruch 2, dadurch gekennzeichnet, daß die Feder (84) eine als Knickschutz dienende Führung (85) aufweist, die aus einem Rohr besteht, dessen Länge kleiner als die der Feder (84) ist.

## Claims

1. A drum brake comprising a support plate (10), on which a pair of brake shoes (12, 14) are mounted, the brake shoes being adapted to be moved in frictional engagement with a rotating drum by a first brake motor (20) interposed between two adjacent first extremities (22, 24) of the brake shoes (12, 14) biased towards each other by a first return spring, the two other extremities (28, 30) of the brake shoes (12, 14) being biased by means of a second return spring (34) into engagement with a strut (32) cooperating with each of the brake shoes (12, 14) and comprising an automatic wear adjustment device (36, 38), said strut further comprising a centering device (82) biasing it towards a central rest position by means of resilient means (84) being in engagement, on one side, with a fixed abutment member (94) and an abutment portion (98) supported by said strut and on the other side with an other fixed abutment member (96) and another abutment portion (100) also supported by the strut, characterized in that said brake comprises a second brake motor (26) interposed between said other extremities (28, 30) adapted to provoke frictional engagement of the two brake shoes (12, 14), said first brake motor (20) assuring the anchorage of the brake shoes (12, 14), in that said second brake motor (26) is adapted to actuate the automatic wear adjustment devices (36, 38) by means of said strut (32) cooperating with movable elements (50, 62) of said automatic adjustment devices (36, 38) disposed upon each of said brake shoes (12, 14), and in that said strut (32) comprises an opening (90) having shoulders (98, 100) forming said abutment portions (98, 100), fixed abutment members entering into said opening.

2. A drum brake according to claim 1 characterized in that a pair of abutment parts (86, 88) mounted in said opening (90) are adapted to slide with respect to the latter and in that a spring (84) forming said resilient means (84) is mounted between said abutment parts.

3. A drum brake according to claim 2 characterized in that said abutment parts (86, 88) are adapted to cooperate with said shoulders (98, 100) under the action of said spring (84).

4. A drum brake according to claim 3, characterized in that said fixed abutment members (94, 96) are circumferentially spaced by a distance substantially equal to the circumferential spacing of said shoulders (98, 100) of said opening (90).

5. A drum brake according to any of claims 1—4 characterized in that each of the two wear adjustment devices (36, 38) assures wear adjustment of the corresponding brake shoe (12, 14) by means of projections (68, 70) supported by said strut (32).

6. A drum brake according to claim 5, characterized in that said spring (84) has, in its rest position, a prebias greater than the force necessary for actuating any of the two wear adjustment devices (36, 38).

7. A drum brake according to claim 5 or claim 6, characterized in that said projections (68, 70) comprise slotted cylindrical pins mounted in corresponding bores formed in said strut (32) and adapted to cooperate with projections (72, 74) supported by movable elements (50, 62) of the wear adjustment devices (36, 38).

8. A drum brake according to claim 2, characterized in that said spring (84) comprises a guide (85) to prevent buckling of the spring, said guide comprising a tube having a length smaller than that of said spring (84).

FIG_1

## FIG_2

## FIG_3

## FIG_4